# EUROPÄISCHE PATENTSCHRIFT

(11) **EP 2 575 576 B1**
(45) Veröffentlichungstag und Bekanntmachung des Hinweises auf die Patenterteilung: **04.03.2020**
(21) Anmeldenummer: 11719528.9
(22) Anmeldetag: 10.05.2011
(51) Int. Cl.: A47J 43/044, F16H 35/14

(54) **KÜCHENGERÄT MIT SCHWENKARM**
KITCHEN APPLIANCE WITH A PIVOTING ARM
APPAREIL DE CUISINE MUNI D'UN BRAS PIVOTANT

(30) Priorität: 28.05.2010 DE 102010021917
(43) Veröffentlichungstag der Anmeldung: 10.04.2013
(73) Patentinhaber: BSH Hausgeräte GmbH, 81739 München (DE)
(72) Erfinder: BLAGOTINSEK, Andrej, 2380 Slovenj Gradec (SI); BRECKO, Ales, 1241 Kamnik (SI); UPLAZNIK, Marko, 3312 Prebold (SI)
(86) Internationale Anmeldenummer: PCT/EP2011/057494
(87) Internationale Veröffentlichungsnummer: WO 2011/147675

(56) Entgegenhaltungen:
- WO-A1-2008/132429
- DE-C- 730 646
- NL-A- 7 115 107
- US-A- 2 061 868

## Beschreibung

### Hintergrund der Erfindung

Die vorliegende Erfindung betrifft ein Küchengerät, insbesondere eine Küchenmaschine, mit einem Grundkörper und einem Schwenkarm, der an einer Lagerstelle schwenkbar am Grundkörper angeordnet ist.

### Stand der Technik

Küchenmaschine bzw. Universalküchenmaschinen sind üblicherweise elektrische Küchengeräte, die bekanntermaßen zum Kneten, Rühren, Raspeln, Pürieren oder Entsaften eingesetzt werden. Diese Geräte bestehen aus einer Grundeinheit mit einer Rühr- oder Auffangschüssel und verschiedenen Anbauteilen, beispielsweise Zerkleinerer, Mixaufsatz, Getreidemühle oder Saftpresse sowie verschiedenen Einsätzen (Schneid- und Raspelscheibe, Knethaken, Schlag- und Rührbesen). Um diese oben genannten Funktionen auszuüben, weisen Küchenmaschinen eine Vielzahl an Bearbeitungswerkzeuge auf. Die Bearbeitungswerkzeuge können scheiben-, trommel- oder kegelförmig sein. Einige Geräte erlauben das Aufstecken einzelner Knethaken oder Schneebesen. Rühr- oder Auffangschüsseln sind im Gerät integriert oder können abgenommen werden; teilweise sind eigene Werkzeuge fest eingebaut. Manche Zusatzgeräte sind komplette Einheiten (Fleischwolf, Saftpresse), die nur den Antrieb der Maschine nutzen. Die Drehzahl bei elektrischen Geräten kann meistens in mehreren Stufen reguliert werden oder ist stufenlos regelbar. Zum Anschließen der Bearbeitungswerkzeuge weisen Küchenmaschinen wenigstens eine Schnittstelle bzw. Ankoppelstellen auf, die eingerichtet ist, um Werkzeuge mit dem elektrischen Antrieb zu verbinden.

Diese Küchenmaschinen weisen im Wesentlichen ein L-förmiges Grundgehäuse mit einem waagerechten Sockelteil auf. An diesem waagerechten Sockelteil kann eine Verarbeitungsschüssel angeordnet werden, in welcher die gewünschten Zutaten mit Hilfe des Werkzeugs verarbeitet werden können. Weiter weisen diese gattungsgemäßen Küchenmaschinen einen Auslegearm auf, der mit Hilfe eines Gelenks an einem Grundgehäuse angebracht ist. Der Auslegearm weist eine Reihe an Ankoppelstellen für oben genanntes Werkzeug auf. Um beispielsweise die Verarbeitungsschüssel entfernen zu können, weist der Auslegearm eine schwenkbare Lagerstelle am Grundgehäuse auf, so dass durch das Hochklappen des Arms die Verarbeitungsschüssel leicht abgenommen werden kann. Ein weiterer Vorteil der schwenkbaren Lagerung des Auslegearms am Grundgehäuse kann beispielsweise die platzsparende Aufbewahrung der Küchenmaschine ermöglichen, da der Auslegearm in einer senkrechten Position fixiert werden kann. In dieser Position können ferner weitere Koppelstellen bereitgestellt werden, beispielsweise ein Mixeraufsatz oder desgleichen.

Um die Schwenkbewegungen des Auslegearms zu kontrollieren, umfassen die die Geräte unterschiedliche Vorrichtungen am Grundgehäuse auf. So offenbart die WO 2008/132429 A1 eine Universalküchenmaschine der genannten Art mit einem Auslegearm, dessen Bewegung mit Hilfe einer elastischen Feder gesteuert wird. Ferner weist das Küchengerät ein Dämpfungsmittel auf, welches der Federkraft entgegenwirkt, um ein unkontrolliertes Aufklappen des Arms zu vermeiden. Das Dämpfungsmittel entspricht einem hydraulischen Dämpfer und kann gemäß der WO 2008/132429 A1 unterschiedliche Dämpfungsgrade aufweisen. Diese Konstruktion hat sich als unflexibel und kompliziert erwiesen, da die Federkraft ein entsprechendes Drehmoment auf den Schwenkarm ausübt, welches einem einseitigen Aufschwenken des Arms entspricht. Weiter kann gemäß dieser Konstruktion keine im Wesentlichen vertikale Position des Schwenkarms gewährleistet werden.

### Der Erfindung zugrundeliegende Aufgabe

Der Erfindung liegt die Aufgabe zugrunde, ein gegenüber dem Stand der Technik verbessertes Küchengerät bereitzustellen, welches komfortabel bedienbar ist und ein flexibles Schwenken des Schwenkarms bereitstellt.

### Erfindungsgemäße Lösung

Die Lösung der gestellten Aufgabe gelingt durch ein Küchengerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche. Das erfindungsgemäße Küchengerät baut auf gattungsbildende Küchengeräte dadurch auf, dass es eine Hebeleinrichtung zum Unterstützen einer Schwenkbewegung des Schwenkarms aufweist. Die Hebeleinrichtung wirkt an einer Lagerstelle mit dem Schwenkarm zusammen, dergestalt, dass ein Benutzer die Schwenkbewegung leicht kontrollieren kann. So kann dieser beispielsweise den Schwenkarm nach Entsicherung eines Sicherungsschalters einfach nach oben bewegen, da die Hebeleinrichtung ein entsprechendes unterstützendes Drehmoment auf den Schwenkarm ausübt.

Die Hebeleinrichtung kann ferner ein richtungsänderndes Drehmoment bereitstellen, welches die Schwenkbewegung in beiden Richtungen unterstützt, nämlich zum Grundkörper oder vom Grundkörper hinweg. Der Schwenkarm umfasst unter Anderem eine Antriebseinheit für unterschiedliche Bearbeitungswerkzeuge, wie ein Planetengetriebe, welches ein relativ hohes Eigengewicht des Schwenkarms verursacht. Die Hebeleinrichtung hat weiter den Vorteil, dass das Eigengewicht des Schwenkarms kompensiert werden kann. Durch Anpassungen der Geometrie der Hebeleinrichtung kann ferner die Schwenkbewegung abhängig vom Eigengewicht und/oder Reibungen in der Lagerstelle genau und für einen Benutzer als sicher und angenehm eingestellt werden.

Es ist bevorzugt, dass die Hebeleinrichtung dergestalt ausgebildet ist, dass ein Drehmoment auf den Schwenkarm ausübbar ist, wobei die Richtung des Drehmoments von einer Schwenkposition des Schwenkarms abhängt. Durch die Richtungsabhängigkeit des Drehmomentes von der Schwenkposition des Schwenkarms, kann wahlweise ein Aufklappen bzw. ein Herunterklappen des Schwenkarms mittels der Hebeleinrichtung bewirkt werden. Folglich wird ein automatisches Schwenken des Arms in beiden Richtungen gewährleistet.

Es ist bevorzugt, dass der Schwenkarm eine erste Betriebsstellung aufweist, in welcher eine Schwenkarmachse im Wesentlichen horizontal verläuft, wobei in der ersten Betriebsstellung die Hebeleinrichtung dergestalt ausgebildet ist, dass das ausgeübte Drehmoment in Richtung einer Schwenkbewegung des Schwenkarms vom Grundkörper hinweg gerichtet ist. Durch diese vorteilhafte Ausgestaltung der Hebeleinrichtung kann der Schwenkarm automatisch nach oben schwenken, so dass beispielsweise weitere Zutaten in eine Verarbeitungsschüssel der Küchenmaschine hinzugefügt werden können. Der Benutzer des Küchengeräts kann beispielsweise einen Sicherungsknopf betätigen, der folglich den Schwenkarm entsichert, damit dieser frei schwenken kann. Die Hebeleinrichtung leitet ein Drehmoment auf den Schwenkarm ein, der ein Aufklappen, d.h. eine Bewegung vom Grundkörper hinweg, erfährt. Die Hebeleinrichtung wird so dimensioniert, dass das Eigengewicht des Schwenkarms kompensierbar ist. Durch diese Dimensionierung kann ferner die Aufklappgeschwindigkeit gesteuert werden, welches die Benutzerfreundlichkeit und die Sicherheit des Küchengeräts weiter verbessert.

Bevorzugt weist der Schwenkarm eine Umschaltstellung auf, dergestalt, dass das durch die Hebeleinrichtung auf den Schwenkarm ausübbare Drehmoment im Wesentlichen aufgehoben ist. In dieser Umschaltstellung des Schwenkarms übt die Hebeleinrichtung kein Drehmoment aus, wodurch eine definierte Stellung des Schwenkarms erreicht werden kann. Der Benutzer kann durch leichtes Bewegen des Schwenkarms und/oder durch Betätigen eines Stellglied oder eines Bedienteils die Hebeleinrichtung erneut aktivieren, so dass diese den Schwenkarm bei der Schwenkbewegung unterstützen kann. Diese Umschaltstellung entspricht einer bistabilen Position aus welchem der Schwenkarm durch Benutzerinteraktion herausbringbar ist.

Bevorzugt ist der Schwenkarm durch einen Benutzer des Küchengeräts schwenkbar, wobei die Hebeleinrichtung dergestalt ausgebildet ist, dass bei einem Überschreiten der Umschaltstellung des Schwenkarms eine Umkehrung des ausgeübten Drehmoments erfolgt. Beim Überschreiten der Umschaltstellung wird eine Umkehrung der Drehmomentrichtung durch die Hebeleinrichtung verursacht, welches wahlweise einem Aufklappen oder Zuklappen (Absenken) des Schwenkarms entspricht. Dieses Überschreiten kann für einen Benutzer des Küchengeräts ebenfalls taktil wahrnehmbar sein, falls er z.B. den Schwenkarm herunterklappt und diese Umschaltstellung überschreitet. Nach Überschreiten wird durch die Umkehrung der Drehmomentrichtung der Schwenkarm durch die Hebeleinrichtung selbständig zugeklappt bzw. abgesenkt. Der Benutzer muss folglich beispielsweise nur den Schwenkarm in dieser abgesenkten Position sichern, wobei die Sicherung ebenso automatisch erfolgen kann.

Erfindungsgemäß ist die Hebeleinrichtung mit der Lagerstelle gekoppelt, dergestalt, dass das ausgeübte Drehmoment über die Lagerstelle in den Schwenkarm einleitbar ist. Dadurch kann eine kompakte Bauweise des Küchengerätegehäuses gewährleistet werden, und weiter kann durch die Dimensionierung der Lagerstelle eine Drehmomentanpassung eingestellt werden.

In einer nicht erfindungsgemäßen Variante ist die Hebeleinrichtung mit dem Schwenkarm gekoppelt, dergestalt, dass das ausgeübte Drehmoment direkt in den Schwenkarm einleitbar ist. Folglich kann die Lagerstelle einfacher hergestellt werden, da kein direktes Zusammenwirken mit der Hebeleinrichtung notwendig ist. Dies kann die Lebensdauer des Küchengerätes erhöhen, da der Verschleiß der Lagerstelle abgesenkt werden kann.

Erfindungsgemäß umfasst die Hebeleinrichtung einen ersten Hebel, der mit der Lagerstelle gekoppelt ist und mit dem Schwenkarm schwenkt. Der Hebel ermöglicht ein Zusammenwirken zwischen Hebeleinrichtung und Lagerstelle, wobei durch die Geometrie und/oder Dimension des Hebels das ausgeübte Drehmoment einstellbar ist. So kann beispielsweise bei der Endmontage des Küchengeräts ein neu dimensionierter Hebel eingesetzt werden. Vorstellbar ist, dass der erste Hebel linear ausgebildet ist und unterschiedliche Bereiche zum Zusammenwirken mit dem zweiten Hebel aufweist. So können beispielsweise diese Bereiche auf dem linearen Hebel verteilt sein, wobei der endgültige Bereich erst in der Endmontage ausgewählt werden kann. Folglich kann eine Neudimensionierung des Hebels ohne Austausch von Komponenten durchgeführt werden.

Ferner umfasst die Hebeleinrichtung einen zweiten Hebel, der mit dem ersten Hebel in einem Gelenk zusammenwirkt. Das Zusammenwirken der zwei Hebel in einem Gelenk erlaubt eine reibungs- und wartungsarme Verbindung. Das Gelenk kann ferner auf dem linear ausgebildeten ersten Hebel in der Endmontage neu montiert werden, da dieser unterschiedliche Aufnahmebereiche für den zweiten Hebel aufweisen kann. Durch die Vielzahl an Aufnahmebereichen auf dem ersten Hebel können folglich die Dimension und die Geometrie der Hebeleinrichtung beeinflusst bzw. eingestellt werden. Das Gelenk wird z.B. durch eine Nut und eine Bohrung gebildet, wobei die Bohrung die Nut aufnehmen kann. Folglich können mehrere Bohrungen auf dem ersten linear verlaufenden Hebel angeordnet sein. Somit kann das Gelenk neu platziert werden, welches die Größe des ausübbaren Drehmoments steuern kann.

Erfindungsgemäß wirkt der zweite Hebel an der dem Gelenk gegenüberliegenden Seite mit einem kraftaktiven Mittel, insbesondere einer elastischen Feder, an einer Verbindungsstelle zusammen, das mit dem Grundkörper gekoppelt ist. Durch das kraftaktive Mittel kann ein Drehmoment auf den Schwenkarm ausgeübt werden, ohne dass Benutzerinteraktion notwendig ist.

Vorteilhafterweise weist der zweite Hebel eine Bogenform oder Winkelform auf. Durch diese Form kann eine kompakte Bauweise der Hebeleinrichtung in einem Gehäuse des Küchengeräts gewährleistet werden.

Gemäß einer weiteren Ausführungsform der vorliegenden Erfindung weist der Schwenkarm wenigstens eine Schwenkstellung bzw. Schwenkposition auf, in welcher der zweite Hebel um eine Lagerachse der Lagerstelle verläuft, dergestalt, dass die Lagerachse zwischen dem Gelenk und der Verbindungsstelle angeordnet ist. Dies bringt den Vorteil mit sich, dass die Kraft des kraftaktiven Mittels um die Lagerachse bzw. den Lagerzapfen der Lagerstelle übertragen werden kann, ohne dass die kompakte Bauweise des Küchengeräts verändert werden muss.

Zweckmäßigerweise weist die Hebeleinrichtung ein Mittel zum Dämpfen der Schwenkbewegung des Schwenkarms auf. Das Mittel zum Dämpfen erhöht die Sicherheit des Küchengeräts, da der Schwenkarm nicht unkontrolliert hoch- bzw. runterklappen kann.

Es ist bevorzugt, dass das die Hebeleinrichtung dergestalt ausgebildet ist, dass das Mittel zum Dämpfen der Schwenkbewegung durch die Hebeleinrichtung selbst bereitstellbar ist. Dadurch kann ein zusätzliches Mittel gespart werden. Die besondere Geometrie und Dimensionierung der Hebeleinrichtung stellt eine Kompensation des Eigengewichts des Schwenkarms bereit.

Die vorliegende Erfindung eignet sich insbesondere für Küchenmaschine, die einen Schwenkarm und eine Vielzahl an Ankoppelstellen für Verarbeitungswerkzeug aufweisen. Ein Benutzer kann flexibel und sicher den Schwenkarm bedienen, so dass unterschiedliches Werkzeug angeschlossen werden kann und/oder eine raumsparende Lagerung bzw. Aufbewahrung des Küchengeräts bereitstellbar ist.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen:
- Fig. 1: eine Seitenansicht eines Küchengeräts gemäß der vorliegenden Erfindung;
- Fig. 2a: eine weitere Seitenansicht des erfindungsgemäßen Küchengeräts;
- Fig. 2b: eine perspektivische Ansicht des Küchengeräts gemäß der Erfindung in einer ersten Betriebsstellung;
- Fig. 3a: eine Seitenansicht des erfindungsgemäßen Küchengeräts in einer Zwischenstellung;
- Fig. 3b: eine perspektivische Ansicht des Küchengeräts gemäß Fig. 3a;
- Fig. 4a: eine Seitenansicht des erfindungsgemäßen Küchengeräts mit eingeklapptem Schwenkarm; und schließlich
- Fig. 4b: die perspektivische Ansicht des Küchengeräts aus Fig. 4a.

### Ausführliche Beschreibung der Figuren

Bei der nachfolgenden Beschreibung bevorzugter Ausgestaltungen der vorliegenden Erfindung bezeichnen gleiche Bezugszeichen gleiche oder vergleichbare Komponenten.

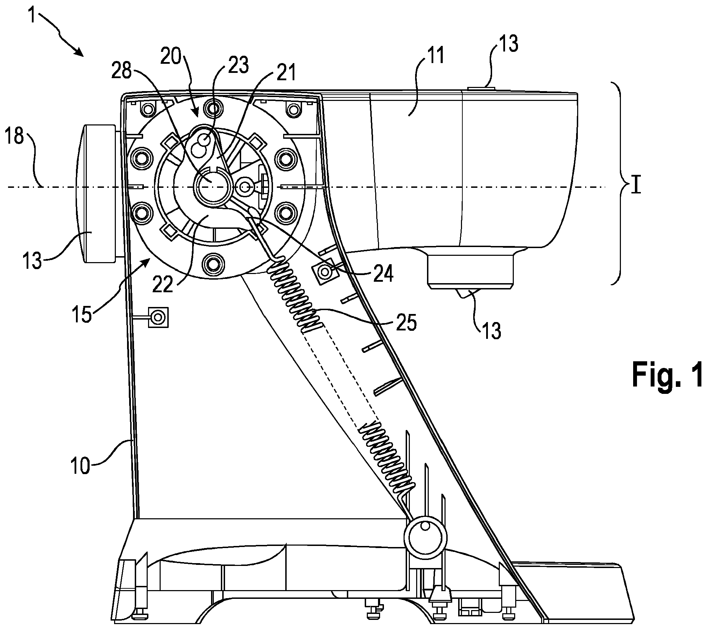

Fig. 1 zeigt ein Küchengerät, insbesondere elektromotorisches Küchengerät 1, vorzugsweise elektromotorische Solo- oder Universalküchenmaschine gemäß der vorliegenden Erfindung. Das Küchengerät 1 weist im Wesentlichen einen L-förmigen Aufbau mit einem Sockelteil 14 auf welchem eine Schüssel (nicht gezeigt) zum Aufnehmen von Nahrungsmitteln anbringbar ist. Das Küchengerät 1 umfasst einen Grundkörper 10 und einen Schwenkarm 11. Gemäß dieser Ausführungsform der vorliegenden Erfindung weist der Schwenkarm 11 eine Vielzahl an Ankoppelstellen 13 für Verarbeitungswerkzeug (nicht gezeigt). Als Verarbeitungswerkzeuge können insbesondere Pürier-, Misch-, Häcksel-, Knet- und/oder Schneidwerke, Schlag- bzw. Rührbesen, Getränkemixer, Durchlaufschnitzler, Getreidemühlen, Zitrus- bzw. Fruchtpressen und/oder Fleischwolf, gemeint sein. In Abhängigkeit von der Schwenkarmposition können einzelne Ankoppelstellen 13 betrieben werden, wobei üblicherweise der Antriebsmotor des elektrischen Küchengeräts 1 im Grundkörper 10 angeordnet ist und sein Drehmoment über geeignete Getriebeeinrichtungen an die einzelnen Ankoppelstellen 13 übertragen wird. So wird die Ankoppelstelle 13 im unteren Bereich, mit Bezug auf Fig. 1, des Schwenkarms 11 beispielsweise zum Betrieb eines Rührwerkzeugs zum Verarbeiten von Teig verwendet. Die seitlich am Schwenkarm 11 angeordnete Ankoppelstelle 13 kann zum Anschließen eines Fleischwolfs verwendet werden, wobei auch weitere Verarbeitungswerkzeuge einsetzbar sind.

Der Schwenkarm 11 wirkt mit dem Grundkörper 10 des Küchengeräts an einer Lagerstelle 15 zusammen. Die Lagerstelle 15 ist derart ausgebildet, dass der Schwenkarm 11 unterschiedliche Betriebsstellungen bzw. Betriebspositionen I, II, III einnehmen kann. Fig. 1 zeigt eine erste Betriebsstellung I auf, in welcher der Schwenkarm 11 horizontal fixiert ist, um beispielsweise Teig in einer Rührschüssel unterhalb der Ankoppelstelle 13 verarbeiten zu können. In dieser Betriebsstellung I verläuft die Schwenkarmachse im Wesentlichen horizontal. Die Lagerstelle weist eine Lagerachse 28 auf, welche beispielsweise von einem Lagerzapfen definiert wird. Auf diesem Lagerzapfen wird in geeigneter Weise der Schwenkarm 11 angekoppelt, so dass eine einfache Schwenkbewegung gewährleistet werden kann. Der Arm 11 schwenkt folglich im Wesentlichen zwischen zwei Endstellungen, nämlich die Stellung in welcher die Schwenkarmachse 18 parallel mit dem Grundkörper verläuft und eine weitere Stellung, in welcher die Schwenkarmachse 18 der Verlängerung der Grundkörperachse entspricht. Durch die stufenlose Lagerung des Schwenkarms 11 an der Lagerstelle 15 sind unterschiedliche Zwischenstellungen II einstellbar.

Die Hebeleinrichtung 20, die mit der Lagerstelle 15 gekoppelt ist, weist einen ersten Hebel 21 und einen zweiten Hebel 22 auf. Der zweite Hebel 22 wirkt in einem Verbindungsbereich 24 mit einer elastischen Feder 25 zusammen. Die elastische Feder 25 wird entsprechend auch am Grundkörper 10 befestigt. Der Grundkörper 10 bietet einen festen Haltepunkt für die Feder 25, so dass die Hebeleinrichtung 20 die Federkraft zur Unterstützung des Schwenkarms 11 umsetzen kann. Der erste und der zweite Hebel 21, 22 wirken entsprechend in einem Gelenk 23 zusammen, welches die Federkraft, die auf den zweiten Hebel 22 wirkt, auf den ersten Hebel 21 überträgt. Der erste Hebel 21 ist an der Lagerachse 28 der Lagerstelle 15 angeordnet und überträgt das Drehmoment auf den Schwenkarm 11. Der erste Hebel 21 ist dergestalt an der Lagerstelle 15 angeordnet, dass er mit dem Schwenkarm 11 schwenkt und die Federkraft in ein Drehmoment umwandeln kann, das den Arm 11 unterstützt. Anhand der folgenden Figuren wird die Funktionsweise der Hebeleinrichtung 20 genauer erläutert.

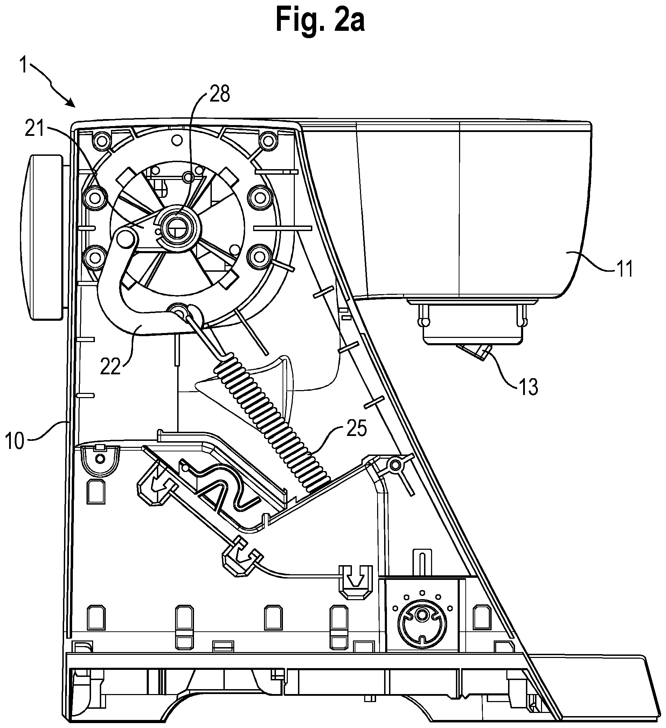

Fig. 2a zeigt eine Seiteansicht auf das Küchengerät gemäß der vorliegenden Erfindung. Der Schwenkarm 11 ist ähnlich wie in der Fig. 1 in einer ersten Betriebsstellung I fixiert, so dass beispielsweise Lebensmittel in einer auf dem Sockelteil 14 angeordneten Schüssel verarbeitet werden können. Die Feder 25, welche in einem zweiten Gelenk 24 mit dem zweiten Hebel 22 zusammenwirkt, weist einen gespannten Zustand (d.h. die Feder ist gespannt) auf. Daher zieht die elastische Feder an dem zweiten Hebel 22 mit einer bestimmten Kraft. Diese Kraft wird weiter über das erste Gelenk 21 an den ersten Hebel 21 übertragen. Der erste Hebel ist drehfest auf der Lagerachse 28 angeordnet, und somit wirkt ein durch die Federkraft verursachte Drehmoment auf die Lagerachse 28. Da die Lagerachse 28 mit dem Schwenkarm 11 verbunden ist, wirkt diese Drehmoment folglich auch auf den Schwenkarm 11. Damit der Arm 11 nicht aus der Betriebsstellung I geschwenkt werden kann, weist das Küchengerät eine Sicherung (nicht gezeigt) oder Fixierungseinrichtung des Schwenkarms. Die Sicherung gleicht somit das Drehmoment aus, und das Küchengerät 1 kann in dieser Betriebsstellung I sicher betrieben werden.

Gemäß einer möglichen Ausführungsform kann die Sicherung des Schwenkarms 11 beispielsweise mittels eines auf dem Schwenkarm 11 angeordneten Bedienknopfes (nicht dargestellt) oder wahlweise kann dieser Bedienknopf an einer geeigneten Stelle am Grundkörper 10 angeordnet sein. Das Betätigen des Bedienknopfes durch einen Benutzer bewirkt, dass der Schwenkarm 11 erneut frei schwenken kann, und somit kann das durch die Federkraft ausgeübte Drehmoment auf den Schwenkarm 11 wirken. Gemäß dieser Anordnung würde das Drehmoment ein Aufklappen des Schwenkarms bewirken, d.h. der Schwenkarm 11 bewegt sich vom Grundkörper 10 nach oben hinweg.

Im aufgeklappten Zustand kann folglich die Schüssel besser erreicht werden und Zutaten wie Nahrungsmittel oder desgleichen können eingefüllt werden. Auch ein Wechsel des Verarbeitungswerkzeugs in der Ankoppelstelle 13 kann somit leichter und bedienerfreundlicher durchgeführt werden.

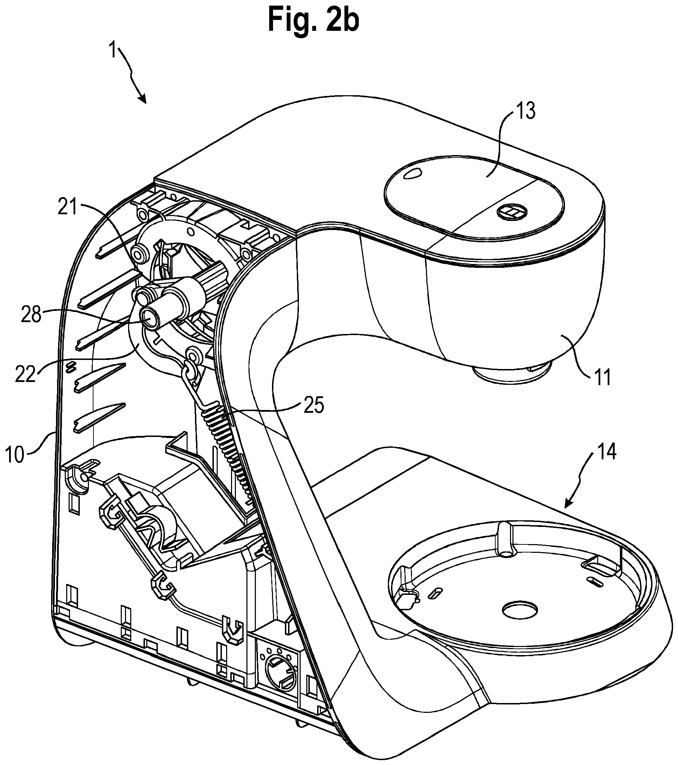

Fig. 2b zeigt eine perspektivische Ansicht des Küchengeräts. Der erste Hebel 21 ist derart auf der Lagerachse 28 angeordnet, dass dieser mit dem Schwenkarm 11 synchron schwenken kann. Nachdem die oben beschrieben Sicherung gelöst wurde, zieht die Federkraft über den zweiten Hebel 22 an dem ersten Hebel 21. Dieses übt demgemäß ein Drehmoment auf den Schwenkarm 11 aus, das ein hoch klappen bzw. aufschwenken des Schwenkarms bewirkt. Durch die Dimensionierung der Hebel, können unterschiedliche Drehmomente eingestellt werden, welche an das Eigengewicht des Schwenkarms 11 angepasst werden können.

Gemäß einer anderen Ausführungsform der Hebeleinrichtung 20, kann ein Drehmoment auf den Schwenkarm 11 ausgeübt werden, welches ein Runterklappen des Schwenkarms bewirkt. Dieses kann durch eine geeignete Stellung des ersten Hebels 21 mit Bezug auf die Lagerachse 28 erreicht werden. Dazu müsste das Gelenk 23 gemäß der Darstellung aus Fig. 2b rechts von der Lacherachse 28 angeordnet sein. Folglich würde das Drehmoment ein Herunterklappen des Schwenkarms 11 verursachen.

Auch denkbar ist die Dimensionierung des ersten und oder zweiten Hebels 21,22 dergestalt, dass das Eigengewicht des Schwenkarms, d.h. das dadurch bewirkte Drehmoment an der Lagerachse 28, das durch die Federkraft ausgeübte Drehmoment überwindet, welches ebenso zu einem Herunterklappen führen würde. In diesem Fall müsste ein Benutzer den Schwenkarm 11 in Richtung der ersten Betriebsstellung I selbsttätig bewegen.

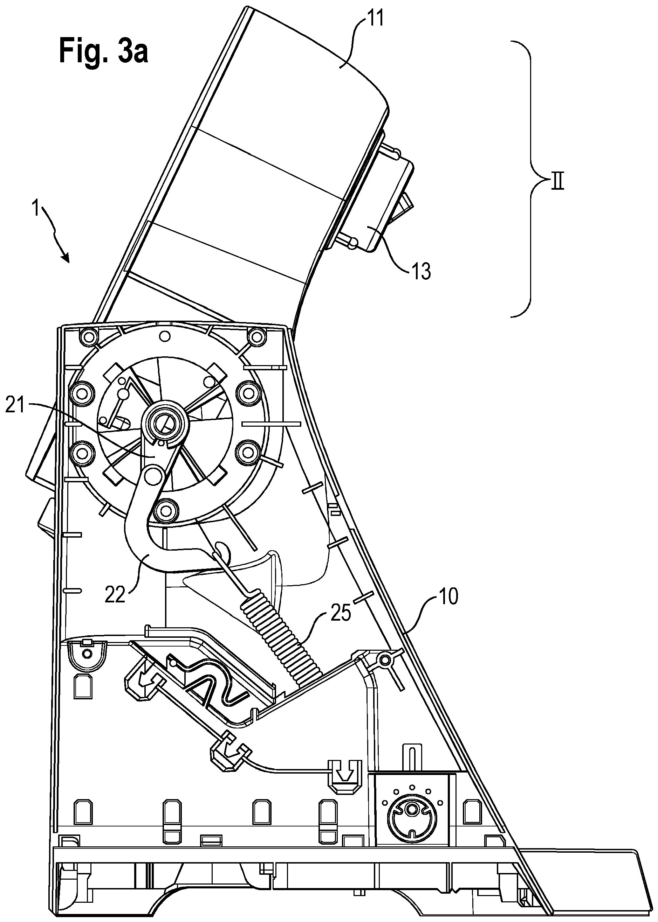

Fig. 3a zeigt das erfindungsgemäße Küchengerät in der Seitenansicht in einer Zwischenstellung. Gemäß dieser in der Fig. 3a gezeigten Zwischenstellung II des Küchengeräts ist das auf den Schwenkarm ausgeübte Drehmoment im Wesentlichen aufgehoben. Dieses Aufheben wird durch die Eigengewichtskraft des Schwenkarms 11 bewirkt, die ein Gegenmoment auf die Lagerachse 28 des Schwenkarms 11 erzeugt, das dem durch die Federkraft erzeugte Drehmoment entgegengesetzt ist. Es sei bemerkt, dass der Winkel des Schwenkarms zur horizontalen Achse ferner abhängig von den an der Ankoppelstelle 13 angeschlossenen Verarbeitungswerkzeugen sein kann. Dies entsteht falls beispielsweise verhältnismäßig schwere Werkzeuge (Knethaken) eingesetzt werden.

Die Hebeleinrichtung 20 kann ein Mittel zum Dämpfen der Schwenkbewegung des Schwenkarms 11 aufweisen. Gemäß einer Ausführungsform stellt die Geometrie und Dimensionierung der Hebel das Mittel zum Dämpfen selbst bereit. Das Mittel dämpft die Schwenkbewegung des Schwenkarms 11 dergestalt, dass kein rasches Aufklappen oder Runterklappen des Schwenkarms 11 auftreten kann. Daher ist die Zugkraft der elastischen Feder und/oder die Geometrie der jeweiligen Hebel 21, 22 am Eigengewicht des Schwenkarms 11 angepasst. Durch diese Anpassung kann eine relativ langsame Schwenkbewegung realisiert werden, welches die Benutzerfreundlichkeit und die Sicherheit des Küchengeräts wesentlich verbessert.

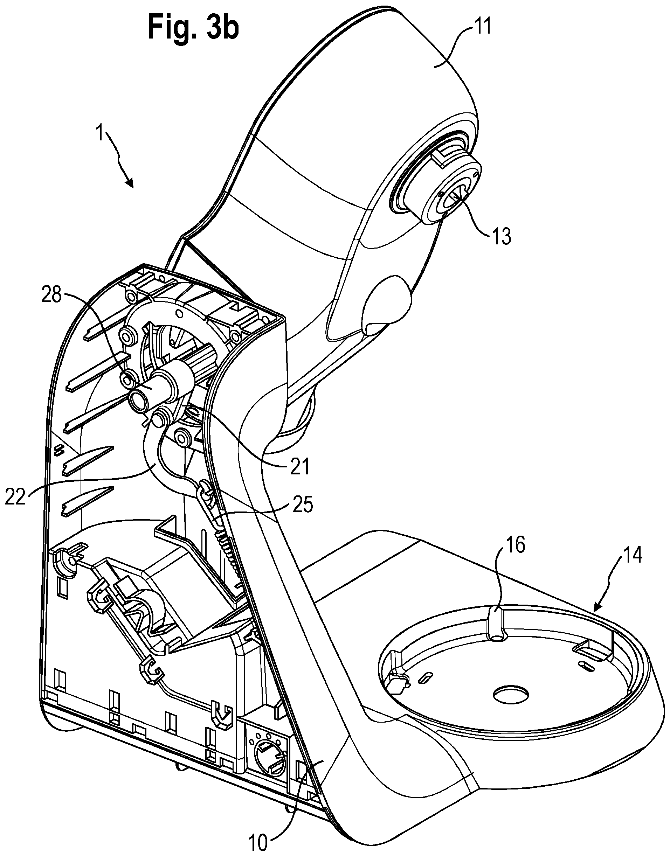

Fig. 3b zeigt eine perspektivische Ansicht des Küchengeräts in einer Zwischenstellung gem. Fig. 3a. Die Lagerstelle 15 weist gemäß dieser Ausführungsform einen Lagerzapfen an der Lagerachse 28, an welchem der erste Hebel 21 drehfest angeordnet ist. Der erste Hebel 21 kann folglich synchron mit dem Schwenkarm 11 schwenken, da die Lagerachse 18 bzw. der Lagerzapfen mit dem Schwenkarm mitschwenkt.

In einer nicht erfindungsgemäßen Variante kann die Hebeleinrichtung 10 direkt am Schwenkarm 11 ansetzten, so dass die Federkraft direkt in den Schwenkarm 11 eingeleitet werden kann, ohne dass die Lagerachse 28 belastet werden muss. Dies bringt den Vorteil mit sich, dass höhere Zugkräfte direkt vom Schwenkarm 11 aufgenommen werden können.

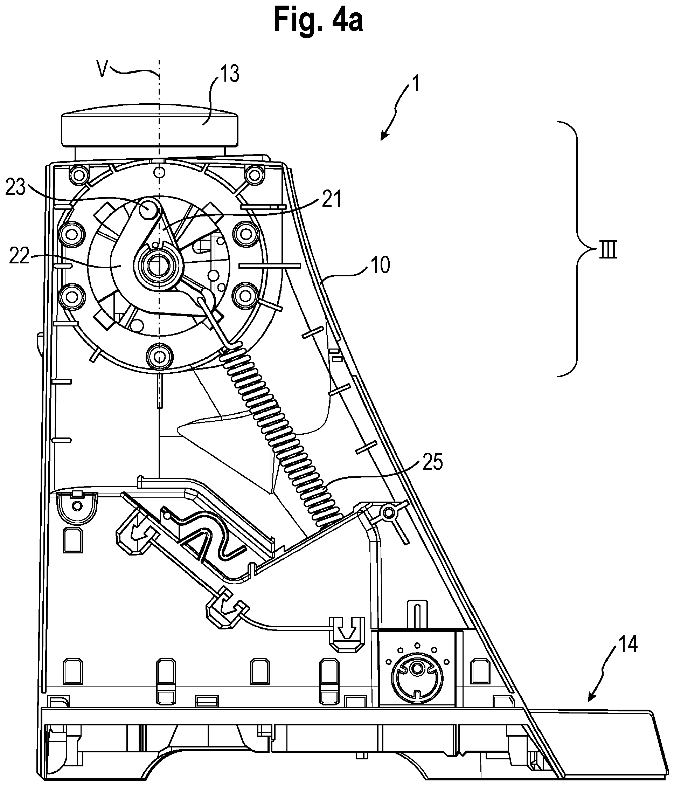

Fig. 4a zeigt eine weitere Betriebsstellung des Schwenkarms. Gemäß dieser Betriebsstellung ist der Schwenkarm 11 komplett eingeklappt, wobei seine Achse im Wesentlichen vertikal verläuft und parallel zur Achse des Grundkörpers 10 ist. D.h. der Schwenkarm 11 zeigt in Richtung der Ebene des Sockelteils 14, auf welchem beispielsweise eine Schüssel angeordnet werden kann. In dieser Position des Schwenkarms kann die Ankoppelstelle 13 mit einem Mixeraufsatz belegt werde, jedoch auch Entsafteraufsätze oder desgleichen sind anschließbar.

Diese Betriebsstellung gemäß dieser Ausführungsform könnte einer Umschaltstellung III entsprechen, in welcher das durch die Federkraft bewirkte Drehmoment auf den Schwenkarm 11 im Wesentlichen aufgehoben ist. Das Eigengewicht des Schwenkarms übt gemäß dieser Betriebsstellung kein Drehmoment aus, da der Gewichtskraftvektor parallel zum Abstandvektor, der durch den Schwerpunkt des Schwenkarms 11 und der Lagerachse 28 definiert ist, verläuft. In der Umschaltstellung III weist die Feder 25 ihre maximal zu erreichende Spannung auf. Damit das Küchengerät 1 in dieser Stellung sicher betrieben werden kann, weist dieses eine Sicherung auf, welche oben näher beschrieben worden ist.

In der Umschaltstellung III kann eine Umkehrung des durch die Federkraft ausgeübten Drehmoments bewirkt werden. Falls beispielsweise das Gelenk 23 mit Bezug auf Fig. 4a rechts von der Vertikalen V durch die Lagerachse 28 angeordnet ist, wird der Schwenkarm in Richtung zum Grundkörper 10 gedrückt. Gemäß dieser Ausführungsform ist jedoch die Hebeleinrichtung 20 derart eingerichtet, dass das Gelenk 23 leicht linksseitig bezüglich der Vertikalen V angeordnet ist, welches einem Aufklappen des Schwenkarms entsprechen würde, durch Reibungen in der Lagerstelle ist das Drehmoment aufgehoben.

Die Umschalstellung III ist gemäß diesem Beispiel mit einem eingeklappten Schwenkarm erreicht, jedoch sind auch andere Winkel des Schwenkarms 11 bezüglich der Horizontalen einstellbar. Um dieses zu erreichen kann die Hebeleinrichtung neu justiert werden, z.B. durch eine Neustellung des ersten Hebels 21 an der Lagerstelle

Falls ein Benutzer den Bedienknopf der Sicherung im Falle der Umschaltstellung III wird der Schwenkarm 11 aus der Umschaltstellung III gebracht, und eine Umkehrung des durch die Federkraft ausgeübten Drehmoments erfolgt. D.h. die Feder 25 bewegt den Schwenkarm 11 in Richtung der ersten Betriebsstellung I. Die Hebeleinrichtung 20 weist den besonderen Vorteil auf, dass eine Umkehrung des Drehmoments, das auf den Schwenkarm 11 über die Lagerachse 28 oder direkt am Schwenkarm 11 ausgeübt wird, erfolgen kann.

Der zweite Hebel 22 weist einen bogenförmigen Verlauf auf, welcher insbesondere in der Umschaltstellung III um die Lagerachse 28 verläuft. Somit kann die Übertragung der Federkraft vom zweiten Gelenk 24 auf den ersten Gelenk 23 platzsparend erfolgen. Dies ist vorteilhaft, da der Raum innerhalb des Gehäuses eines Küchengeräts 1 begrenzt ist.

Als Alternative zur Bogenform ist auch eine Winkelform einsetzbar. Durch diesen Aufbau kann die durch die zwei Hebel 21, 22 definierte Vorrichtung einen möglichst flachen Aufbau aufweisen, so dass das Einbauen ins Gehäuse montagefreundlich erfolgen kann.

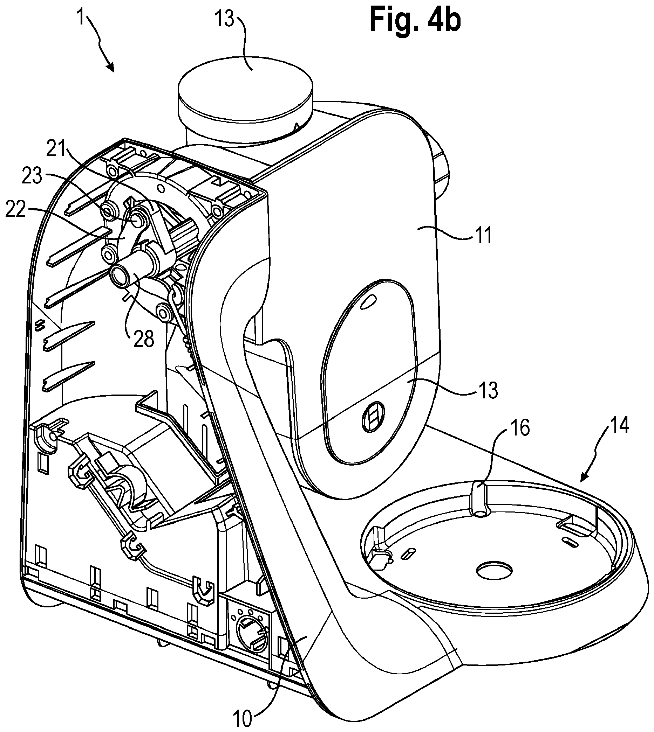

Fig. 4b zeigt eine perspektivische Ansicht eines Küchengeräts gemäß der Erfindung, wobei der Schwenkarm eingeklappt ist. Das Sockelteil 14 ist eingerichtet, um beispielsweise eine Schüssel zu empfangen, wobei die Fixierung der Schüssel mittels unterschiedlicher Verrastungen 16 bereitgestellt werden kann. In dieser Ansicht ist die raumsparende Anordnung der Hebeleinrichtung innerhalb des Gehäuses des Grundkörpers 10 zu erkennen. Der zweite Hebel 22, der die Federkraft mittels des Gelenks 23 auf den ersten Hebel 21 überträgt, ist um den Lagerzapfen der Lagerachse 28 ausgebildet, welches eine besonders flache bzw. ebene Ausgestaltung der Hebeleinrichtung 20 sichert. Beide Gelenke 23 und 24 sind zusammen mit der Achse der Feder 25 in einer Ebene angeordnet, das zu einem raumsparenden Aufbau führt. Wie oben beschrieben kann der zweite Hebel 22 auch eine andere Form einnehmen, bei welcher die zwei Gelenke 23 und 24 und die Federachse in einer Eben liegen.

Durch die Hebeleinrichtung, welche die Schwenkbewegung des Schwenkarms am Grundkörper des Küchengeräts unterstützt, kann ein für einen Benutzer sicherer Betrieb bereitgestellt werden, da die Bewegung des Schwenkarms stets durch die Hebeleinrichtung kontrolliert wird. Weiter kann ein Schwenken des Schwenkarms ohne direkte Interaktion eines Benutzers bereit gestellt werden. Der Benutzer kann eine Handhabe beispielsweise in Form eines Bedienknopfes tätigen und die Hebeleinrichtung kann ein Drehmoment auf den Schwenkarm ausüben, welches ein kontrolliertes Absenken oder Aufklappen des Schwenkarms bewirkt.

### BEZUGSZEICHENLISTE

- 1: Küchengerät
- 10: Grundkörper
- 11: Schwenkarm
- 13: Ankoppelstelle
- 14: Sockel bzw. Sockelteil
- 15: Lagerstelle
- 16: Verrastungen
- 18: horizontale Achse des Schwenkarms
- 20: Hebeleinrichtung
- 21: erster Hebel
- 22: zweiter Hebel
- 23: erstes Gelenk
- 24: zweites Gelenk
- 25: Feder
- 28: Lagerachse
- I: erste Betriebsstellung
- II: Zwischenstellung
- III: Umschaltstellung

## Patentansprüche

1. Küchengerät (1)
- mit einem Grundkörper (10) und
- einem Schwenkarm (11), der an einer Lagerstelle (15) schwenkbar am Grundkörper (10) angeordnet ist,
- **wobei** das Küchengerät (1) eine Hebeleinrichtung (20) zum Unterstützen einer Schwenkbewegung des Schwenkarms (11) aufweist,
- **dadurch gekennzeichnet, dass** die Hebeleinrichtung (20) mit der Lagerstelle (15) gekoppelt ist, dergestalt, dass ein ausgeübtes Drehmoment über die Lagerstelle (15) in den Schwenkarm (11) einleitbar ist,
- wobei die Hebeleinrichtung (20) einen ersten Hebel (21) umfasst, der mit der Lagerstelle (15) gekoppelt ist und mit dem Schwenkarm (11) schwenkt,
- und wobei die Hebeleinrichtung (20) einen zweiten Hebel (22) umfasst, der mit dem ersten Hebel (21) in einem Gelenk (23) zusammenwirkt und der an der dem Gelenk (23) gegenüberliegenden Seite mit einem kraftaktiven Mittel, insbesondere einer elastischen Feder (25), an einer Verbindungsstelle (24) zusammenwirkt, das mit dem Grundkörper (10) gekoppelt ist.

2. Küchengerät (1) nach Anspruch 1, **dadurch gekennzeichnet, dass** die Hebeleinrichtung (20) dergestalt ausgebildet ist, dass ein Drehmoment auf den Schwenkarm (11) ausübbar ist, wobei die Richtung des Drehmoments von einer Schwenkposition (I, II, III) des Schwenkarms (11) abhängt.

3. Küchengerät (1) nach Anspruch 1 oder 2, **dadurch gekennzeichnet, dass** der Schwenkarm (11) eine erste Betriebsstellung (I) aufweist, in welcher seine Schwenkarmachse (18) im Wesentlichen horizontal verläuft, wobei in der ersten Betriebsstellung (I) die Hebeleinrichtung (20) dergestalt ausgebildet ist, dass das ausgeübte Drehmoment in Richtung einer Schwenkbewegung des Schwenkarms (11) vom Grundkörper (10) hinweg gerichtet ist.

4. Küchengerät (1) nach einem der vorhergehenden Ansprüche, **dadurch gekennzeichnet, dass** der Schwenkarm (11) eine Umschaltstellung (III) aufweist, dergestalt, dass das durch die Hebeleinrichtung (20) auf den Schwenkarm (11) ausübbare Drehmoment im Wesentlichen aufgehoben ist.

5. Küchengerät (1) nach Anspruch 4, **dadurch gekennzeichnet, dass** der Schwenkarm (11) durch einen Benutzer des Küchengeräts (1) schwenkbar ist, wobei die Hebeleinrichtung (20) dergestalt ausgebildet ist, dass bei einem Überschreiten der Umschaltstellung (III) des Schwenkarms (11) eine Umkehrung des ausgeübten Drehmoments erfolgt.

6. Küchengerät (1) nach einem der vorhergehenden Ansprüche 1 bis 5, **dadurch gekennzeichnet, dass** die Hebeleinrichtung (20) mit dem Schwenkarm (11) gekoppelt ist, dergestalt, dass das ausgeübte Drehmoment direkt in den Schwenkarm (11) einleitbar ist.

7. Küchengerät (1) nach einem der vorhergehenden Ansprüche, **dadurch gekennzeichnet, dass** die Hebeleinrichtung (20) mit dem Grundkörper (10) gekoppelt ist.

8. Küchengerät (1) nach Anspruch 1, **dadurch gekennzeichnet dass** der zweite Hebel (22) eine Bogenform oder Winkelform aufweist.

9. Küchengerät (1) nach Anspruch 1, **dadurch gekennzeichnet dass** der Schwenkarm (11) wenigstens eine Schwenkstellung (I, II) aufweist, in welcher der zweite Hebel (22) um eine Lagerachse (28) der Lagerstelle (15) verläuft, dergestalt, dass die Lagerachse (28) zwischen dem Gelenk (23) und der Verbindungsstelle (24) angeordnet ist.

10. Küchengerät (1) nach einem der vorhergehenden Ansprüche, **dadurch gekennzeichnet, dass** die Hebeleinrichtung (20) ein Mittel zum Dämpfen der Schwenkbewegung des Schwenkarms (11) aufweist.

11. Küchengerät (1) nach Anspruch 10, **dadurch gekennzeichnet, dass** die Hebeleinrichtung (20) dergestalt ausgebildet ist, dass das Mittel zum Dämpfen der Schwenkbewegung durch die Hebeleinrichtung (20) selbst bereitstellbar ist.

## Claims

1. Kitchen appliance (1)
- with a main body (10) and
- a pivot arm (11), which is arranged pivotably on the main body (10) at a bearing (15),
- **wherein** the kitchen appliance (1) has a lever device (20) for assisting a pivoting movement of the pivot arm (11),
**characterised in that** the lever device (20) is coupled to the bearing (15) so that an exerted torque can be introduced by way of the bearing (15) into the pivot arm (11),
- wherein the lever device (20) comprises a first lever (21) which is coupled to the bearing (15) and pivots with the pivot arm (11),
- and wherein the lever device (20) comprises a second lever (22) which interacts with the first lever (21) in a joint (23) and which interacts on the side opposite the joint (23) with an active force means, in particular an elastic spring (25), at a connection point (24) which is coupled to the main body (10).

2. Kitchen appliance (1) according to claim 1, **characterised in that** the lever device (20) is embodied in such a way that a torque can be exerted on the pivot arm (11), wherein the direction of the torque depends on a pivoting position (I, II, III) of the pivot arm (11).

3. Kitchen appliance (1) according to claim 1 or 2, **characterised in that** the pivot arm (11) has a first operating position (I), in which a pivot arm axis (18) runs essentially horizontally, wherein, in the first operating position (I) the lever device (20) is embodied in such a way that the torque exerted in the direction of a pivoting movement of the pivot arm (11) is directed away from the main body (10).

4. Kitchen appliance (1) according to one of the preceding claims, **characterised in that** the pivot arm (11) has a switchover position (III) in such a way that the torque which can be exerted by the lever device (20) on the pivot arm (11) is essentially suspended.

5. Kitchen appliance (1) according to claim 4, **characterised in that** the pivot arm (11) can be pivoted by a user of the kitchen appliance (1), wherein the lever device (20) is embodied in such a way that, in the event of the switchover position (III) of the pivot arm (11) being exceeded, a reversal of the exerted torque takes place.

6. Kitchen appliance (1) according to one of the preceding claims 1 to 5, **characterised in that** the lever device (20) is coupled to the pivot arm (11) in such a way that the torque exerted can be introduced directly into the pivot arm (11).

7. Kitchen appliance (1) according to one of the preceding claims, **characterised in that** the lever device (20) is coupled to the main body (10).

8. Kitchen appliance (1) according to claim 1, **characterised in that** the second lever (22) has a curved shape or an angled shape.

9. Kitchen appliance (1) according to claim 1, **characterised in that** the pivot arm (13) has at least one pivoting position (I, II) in which the second lever (22) runs about a bearing axis (28) of the bearing (15), in such a way that the bearing axis (28) is arranged between the joint (23) and the connection point (24).

10. Kitchen appliance (1) according to one of the preceding claims, **characterised in that** the lever device (20) has a means for damping the pivoting movement of the pivot arm (11).

11. Kitchen appliance (1) according to claim 10, **characterised in that** the lever device (20) is embodied in such a way that the means for damping the pivoting movement can be provided by the lever device (20) itself.

## Revendications

1. Appareil de cuisine (1) avec
- un corps de base (10) et
- un bras pivotant (11), agencé au corps de base (10) pivotant sur un point d'appui (15),
- l'appareil de cuisine (1) comportant un dispositif de levier (20) pour assister le mouvement pivotant du bras pivotant (11),
- **caractérisé en ce que** le dispositif de levier (20) est accouplé au point d'appui (15) de façon qu'un moment de torsion exercé peut être entamé par le point d'appui (15) dans le bras pivotant (11),
- le dispositif de levier (20) comprenant un premier levier (21) accouplé avec le point d'appui (15) et pivotant avec le bras pivotant (11),
- et le dispositif de levier (20) comprenant un deuxième levier (22), lequel coopère avec le premier levier (21) dans une articulation (23) et coopère, en un point de raccord (24), sur le côté opposé à l'articulation (23) avec un moyen activant une force - en particulier un ressort élastique (25) - lequel est accouplé au corps de base (10).

2. Appareil de cuisine (1) selon la revendication 1, **caractérisé en ce que** le dispositif de levier (20) est réalisé de façon qu'un moment de torsion peut être exercé sur le bras pivotant (11), la direction du moment de torsion dépendant d'une position de pivotement (I, II, III) du bras pivotant (11).

3. Appareil de cuisine (1) selon la revendication 1 ou 2, **caractérisé en ce que** le bras pivotant (11) comporte une première position de marche (I), dans laquelle son axe de bras pivotant (18) s'exerce essentiellement à l'horizontale, dans la première position de marche (I), le dispositif de levier étant réalisé de façon à ce que le moment de torsion exercé est dirigé dans la direction d'un mouvement de pivotement du bras pivotant (11) s'écartant du corps de base (10).

4. Appareil de cuisine (1) selon l'une des revendications précédentes, **caractérisé en ce que** le bras pivotant (11) comporte une position de changement (III), réalisée de façon à ce que le moment de torsion pouvant être exercé par le dispositif de levier (20) sur le bras pivotant (11) est essentiellement équilibré.

5. Appareil de cuisine (1) selon la revendication 4, **caractérisé en ce que** le bras pivotant (11) peut être pivoté par un utilisateur de l'appareil de cuisine (1), le dispositif de levier (20) étant réalisé de façon à ce qu'en cas de dépassement de la position de changement (III) du bras pivotant (11), il se produit une inversion du moment de torsion exercé.

6. Appareil de cuisine (1) selon l'une des revendications précédentes 1 à 5, **caractérisé en ce que** le dispositif de levier (20) est accouplé au bras pivotant (11) de façon à ce que le moment de torsion exercé peut être directement entamé dans le bras pivotant (11).

7. Appareil de cuisine (1) selon l'une des revendications précédentes, **caractérisé en ce que** le dispositif de levier (20) est accouplé au corps de base (10).

8. Appareil de cuisine (1) selon la revendication 1, **caractérisé en ce que** le deuxième levier (22) est de forme arquée ou de forme angulaire.

9. Appareil de cuisine (1) selon la revendication 1, **caractérisé en ce que** le bras pivotant (11) comporte au moins une position de pivotement (I, II) dans laquelle le deuxième levier (22) avance autour d'un axe d'appui (28) du point d'appui (15), de façon que l'axe d'appui (28) est disposé entre l'articulation (23) et le point de raccord (24).

10. Appareil de cuisine (1) selon l'une des revendications précédentes, **caractérisé en ce que** le dispositif de levier (20) comporte un moyen d'amortissement du mouvement de pivotement du bras pivotant (11).

11. Appareil de cuisine (1) selon la revendication 10, **caractérisé en ce que** le dispositif de levier (20) est réalisé de façon à ce que le moyen d'amortissement du mouvement de pivotement peut être automatiquement procuré par le dispositif de levier (20).
